# FASCICULE DE BREVET EUROPEEN

(11) **EP 1 437 641 B1**
(45) Date de publication et mention de la délivrance du brevet: **10.11.2010**
(21) Numéro de dépôt: 03370002.2
(22) Date de dépôt: 07.01.2003
(51) Int. Cl.: G06F 3/00, G06F 3/033

(54) **Interface haptique de type ground-based et comportant au moins deux effecteurs digitaux rotatifs decouples**
Haptische Schnittstellenvorrichtung des Typs ground-based mit mindestens zwei unterschiedlichen digitalen Drehantriebselementen
Haptic interface device of the ground-based type comprising at least two separate rotary digital actuators

(43) Date de publication de la demande: 14.07.2004
(73) Titulaire: UNIVERSITE DES SCIENCES ET TECHNOLOGIES DE LILLE, 59655 Villeneuve-d'Ascq Cedex (FR); CENTRE NATIONAL DE LA RECHERCHE SCIENTIFIQUE (CNRS), 75794 Paris Cedex 16 (FR)
(72) Inventeur: Casiez, Géry, 59980, Honnechy (FR); Chaillou, Christophe, 59800 Lille (FR); Senail née Lenair, Betty, 59800 Lille (FR); Plenacoste, Patricia, 59800, Lille (FR)
(74) Mandataire: Matkowska, Franck

(56) Documents cités:
- EP-A- 1 103 883
- EP-A- 1 128 321
- WO-A-02/10899
- FR-A- 2 767 397
- US-A- 5 095 303
- US-A- 6 128 006

## Description

La présente invention concerne une nouvelle interface haptique de type « ground-based » et comportant au moins deux effecteurs digitaux, c'est-à-dire des effecteurs manipulables avec le bout des doigts d'une seule main. Cette interface peut être utilisée comme périphérique informatique d'un ordinateur ou équivalent, et permet dans ce cas à un utilisateur d'interagir avec un environnement virtuel et notamment de manipuler ou commander des objets virtuels. L'invention trouve également son application dans la commande ou manipulation d'objets réels, l'interface de Invention pouvant être couplée à tout type de machine, tel que par exemple et de manière non limitative, un robot, bras manipulateur,... ; l'interface de l'invention peut également être utilisée dans le domaine de la télé-manipulation.

On désigne communément par interface « haptique», toute interface homme-machine permettant un retour d'effort et/ou un retour tactile pour l'utilisateur.

Les interfaces haptiques manipulables d'une seule main peuvent être classées en deux catégories fondamentalement différentes. La première catégorie regroupe les interfaces haptiques de type «ground-based ». Dans le présent texte, on désigne par interface haptique de type «ground-based », toute interface haptique qui d'une manière générale comporte une structure posée sur une surface (sol, bureau, table,...) et qui est conçue pour être manipulée d'une seule main. La seconde catégorie regroupe les interfaces dites « man-based», qui sont constituées par des dispositifs portatifs et destinées à être fixées sur l'usager. Les exemples les plus répandus d'interface « man-based » sont constitués par les dispositifs haptiques qui sont fixés sur une main, tel que les gants à retour d'effort ou les dispositifs haptiques décrits par exemple dans les publications WO-A-0207143 et WO-A-9851451.

L'invention se situe dans le domaine des interfaces haptiques de la première catégorie ci-dessus, c'est-à-dire de type «ground-based ».

Dans ce domaine, un premier exemple connu d'interface haptique de type « ground-based » est décrit dans le brevet US-B-6417638. Cette interface est un dispositif haptique à six degrés de liberté (dont trois seulement sont motorisés) et comporte essentiellement un bras articulé par rapport à un socle fixe et manipulable d'une seule main. D'une part ce type de dispositif haptique est d'une conception très sophistiquée et est de ce fait très onéreux à fabriquer ; d'autre part, ce dispositif haptique est encombrant et est généralement utilisé avec l'avant-bras en l'air, ce qui rend l'utilisation de ce dispositif fatigante d'un point de vue musculaire.

Un deuxième exemple connu d'interface haptique de type «ground-based » est décrit notamment dans la demande de brevet internationale WO-A-9628777. L'interface décrite dans cette publication est utilisée comme périphérique informatique 3D et comporte un unique effecteur à retour tactile et manipulable du bout des doigts. Plus particulièrement cet effecteur unique se présente sous la forme d'une boule manipulable par un utilisateur. La rotation sur elle-même de la boule permet une commande selon deux axes X et Y, tandis que la commande selon un troisième axe Z transversal au plan (X,Y) est obtenue par un déplacement vertical en translation de la boule. De manière avantageuse, ce type d'interface « ground-based » à effecteur unique manipulable du bout des doigts est peu encombrante et peut être utilisée en ayant la main, au moins en partie, posée sur une surface, ce qui rend son utilisation moins fatigante d'un point de vue musculaire, comparativement par exemple aux interfaces « ground-based » du type de celles décrites dans le brevet précité US-B-6417638.

On connait également, du document US -B-6128006, une interface haptique de type « ground-based », comportant un boîtier comprenant des effecteurs digitaux rotatifs découplés s'étendant au travers de lumières formées dans le boîtier, en sorte que ces effecteurs soient manipulables avec le bout des doigts d'une seule main.

L'interface haptique décrite dans ce document comporte, pour chaque effecteur, un moyen de mesure de la position angulaire de l'effecteur et des moyens d'application sur l'axe de rotation de l'effecteur d'un couple fonction de cette position angulaire mesurée.

Une telle interface ne permet donc qu'un retour de force fonction de la position angulaire de l'effecteur, indépendamment notamment de la force ou de la vitesse avec laquelle l'utilisateur agit sur l'effecteur.

L'invention a ainsi pour objet une nouvelle interface haptique, du type ground-based, manipulable d'une seule main et du bout des doigts, permettant de résoudre les problèmes précités parmi d'autres problèmes.

L'interface haptique du type « ground-based » de l'invention est équipée d'au moins deux effecteurs digitaux rotatifs découplés et manipulables avec le bout des doigts d'une seule main.

De manière comparable à l'interface haptique décrite dans la publication WO-A-9628777, l'interface haptique de l'invention est peu encombrante et peut être utilisée en ayant la main posée au moins en partie sur une surface, ce qui rend avantageusement l'interface moins fatigante à utiliser d'un point de vue musculaire. Le découplage des effecteurs digitaux de l'interface de l'invention permet avantageusement un découplage de chaque degré de liberté, et par là-même une meilleure manipulation des objets virtuels ou réels associés à l'interface, comparativement à l'interface haptique de type ground-based à effecteur unique décrite dans la publication WO-A-962877. Egalement, ce découplage permet avantageusement de simplifier l'architecture mécanique de l'interface comparativement aux architectures mécaniques des interfaces à effecteur unique, en particulier lorsque l'interface est équipée de moteurs ou équivalent pour simuler un retour d'effort et/ou un retour tactile sur chaque degré de liberté. Enfin, il est avantageux que l'interface haptique de l'invention soit conçue pour être manipulée avec le bout des doigts de la main, car il s'agit de la partie de la main la plus sensible au toucher, et par là-même la partie de la main la plus apte à capter la restitution tactile et/ou d'effort.

L'interface comporte, pour chaque effecteur digital rotatif, un moyen de mesure du couple appliqué sur l'axe de rotation de l'effecteur, et des moyens de commande comprenant un moteur permettant de positionner en rotation l'axe de rotation dudit effecteur en fonction du couple appliqué sur l'axe de rotation de cet effecteur et mesuré par le moyen de mesure.

D'autres caractéristiques et avantages de l'invention apparaîtront plus clairement ci-après à la lumière de la description détaillée suivante d'un exemple préféré de réalisation d'une interface haptique de l'invention, laquelle description est donnée à titre d'exemple non limitatif et en référence aux dessins annexés sur lesquels :
- la figure 1 est une représentation en perspective d'une interface ground-based de l'invention qui comporte trois manettes à effecteur rotatif et qui sont manipulables simultanément au moyen du pouce, de l'index et de l'annulaire d'une main,
- les figures 2 et 3 illustrent deux exemples de réalisation d'un effecteur digital,
- la figure 4 représente en perspective une manette assemblée,
- la figure 5 représente en perspective la manette de la figure 4, sans son capteur de position angulaire,
- la figure 6 est une vue éclatée de la manette de la figure 4,
- la figure 7 représente l'interface de la figure 1 sans sa coque, et permet de mieux illustrer le positionnement et le montage des manettes,
- et la figure 8 représente un exemple de boucle de commande du moteur associé à chaque effecteur, et permettant de positionner en rotation l'axe de rotation de l'effecteur en fonction du couple mesuré appliqué sur l'axe de rotation de l'effecteur.

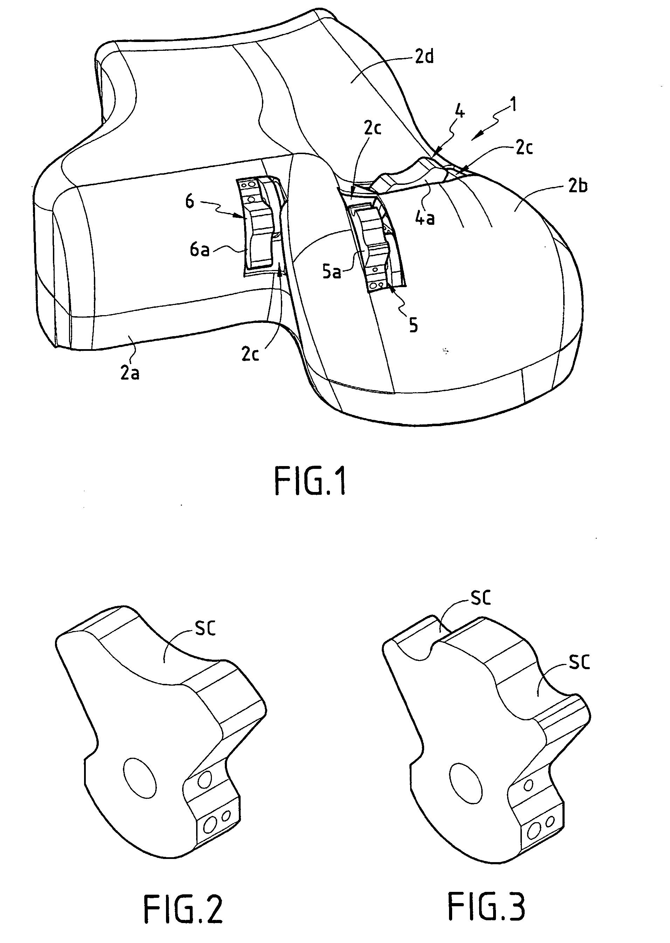

On a représenté sur la figure 1, une variante préférée de réalisation d'une interface haptique de l'invention. Cette interface 1 comporte une structure fixe (2a, 2b) qui est destinée à être posée sur une surface telle que par exemple un bureau ou une table, et sur laquelle sont adaptées trois manettes digitales à retour de force 4, 5 et 6, et comportant chacune respectivement un effecteur rotatif digital 4a, 5a et 6a.

Les trois effecteurs digitaux 4a, 5a et 6a sont des pièces mobiles en rotation et découplées les unes des autres. Chaque effecteur digital rotatif 4a, 5a ou 6a est destiné à être actionné par un doigt d'une main. A chaque effecteur rotatif d'une manette 4, 5 et 6 correspond un degré de liberté.

On a représenté sur les figures 2 et 3 deux exemples non exhaustifs d'effecteur digital, qui se différencient l'un de l'autre par le profil de leur surface de contact SC avec le doigt. Ce profil de la surface de contact SC de chaque effecteur est conçu de manière ergonomique afin d'éviter que l'effecteur ne s'échappe du doigt.

Dans l'exemple illustré sur la figure 1, et de manière non limitative de l'invention, la structure fixe (2a, 2b) précitée forme un boîtier constitué d'un socle 2a coiffé par une coque rapportée 2b. De préférence, la surface externe 2d de la coque 2b qui est destinée à venir en contact avec la paume de la main est conformée en sorte d'avoir une ergonomie adaptée à la main. La coque 2b comporte en outre trois lumières 2c, les effecteurs rotatifs digitaux 4a, 5a, 6a étant en partie passés à travers respectivement les lumières 2c de la coque, et la partie restante de la structure de chaque manette étant logée à l'intérieur du boîtier formé par le socle 2a et la coque 2b.

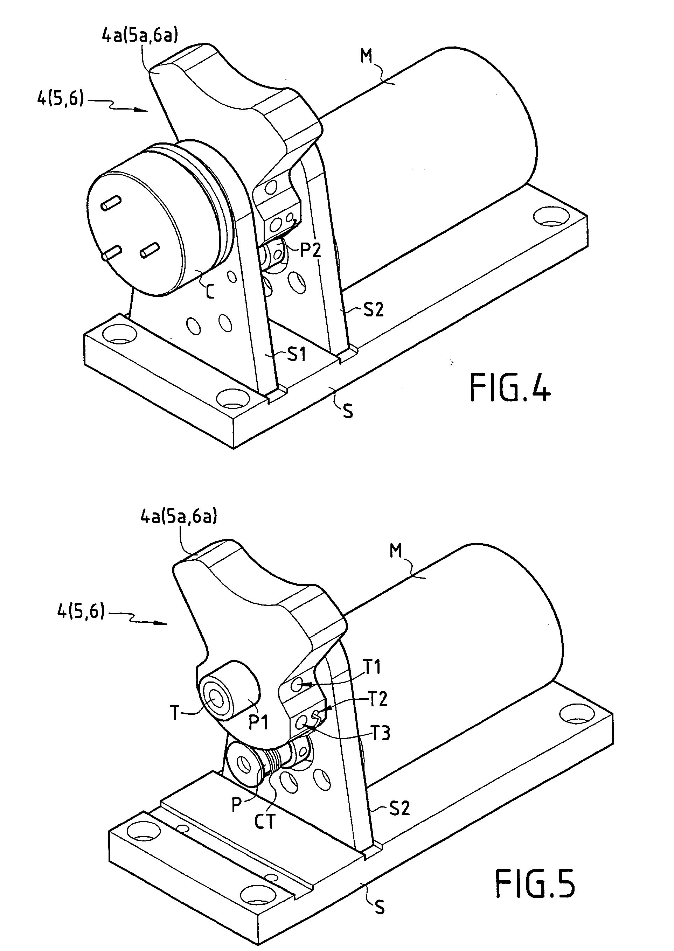

On a représenté sur les figures 4, 5 et 6 un exemple particulier de structure d'une manette. Dans cet exemple, la manette comporte :
- un socle S sur lequel sont montés deux supports parallèles S1 et S2,
- un moteur M, par exemple à courant continu, qui est fixé sur le support S2 et dont l'arbre de sortie AM est passé à travers le support S2 et porte une poulie P,

- une tige creuse rotative T montée libre sur les deux supports S1 et S2 par l'intermédiaire de paliers P1 et P2, la tige s'étendant au-dessus de et parallèlement à l'arbre de sortie AM du moteur M,
- l'effecteur digital 4a (5a ; 6a) qui est enfilé sur la tige T, et qui est fixé sur cette tige (T) au moyen d'une vis ou équivalent (non représentée) passée à travers un trou traversant T1 de l'effecteur; l'ensemble effecteur 4a et tige T est ainsi rotatif, selon l'axe de la tige T, par rapport aux supports S1 et S2,
- un câble de transmission (CT) enroulé autour de la poulie P et passé à travers l'effecteur 4a (figure 5 / trou traversant T2 )
- un moyen de mesure C du couple appliqué sur l'axe de rotation de l'effecteur qui est monté en bout de tige T.

De préférence, la tension initiale du câble CT est réglable au moyen d'une vis de serrage (non représentée) ou de tout autre moyen équivalent, passée à travers le trou traversant T3 (figure 5).

En fonctionnement, le moyen de mesure C délivre une information caractéristique du couple appliqué sur l'axe de rotation de l'effecteur 4a (5a ou 6a). Le moyen de mesure C peut être réalisé au moyen de tout dispositif permettant de mesurer un couple.

Le moteur M permet de positionner en rotation l'axe de rotation de l'effecteur digital, et par là-même de rendre un retour de force sur l'effecteur tel que cela apparaîtra plus clairement ultérieurement.

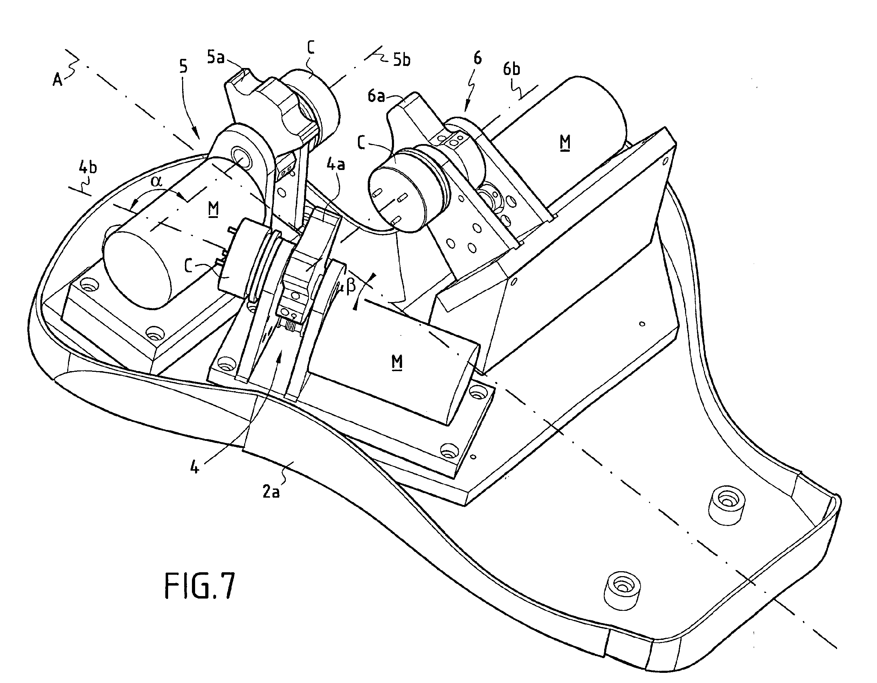

On a représenté sur la figure 7 l'interface 1 sans la coque 2b, ladite figure 7 permettant de mieux visualiser le montage et le positionnement des différentes manettes. Dans la réalisation des figures annexées, les effecteurs 4a et 6a des manettes 4 et 6 sont identiques à l'effecteur de la figure 2, tandis que l'effecteur 5a de la manette 5 est identique à l'effecteur de la figure 3. Ceci n'est pas limitatif de l'invention. Dans une autre réalisation, les effecteurs pourraient être tous identiques, ou au contraire tous différents.

L'utilisation de l'interface se fait en posant le poignet au contact de la surface sur laquelle est posée l'interface, en amenant la paume de la main au contact de la face extérieure 2d du couvercle 2b, et en manipulant en rotation du bout des doigts chaque effecteur 4a, 5a, 6a, chaque effecteur digital étant manipulé par un unique doigt de la main. Dans une autre variante de réalisation de l'invention (non illustrée), il est envisageable de concevoir une interface dont la structure et les effecteurs sont conçus de telle sorte que l'utilisation de l'interface est réalisée avec la main non plus orientée sensiblement horizontalement comme pour la variante de la figure 1, mais avec la main orientée par exemple sensiblement verticalement et posée sur la tranche.

Selon une caractéristique préférentielle de l'invention, les effecteurs digitaux 4a, 5a et 6a sont disposés les uns par rapport aux autres de telle sorte qu'ils peuvent être simultanément manipulés au moyen respectivement du pouce, de l'index et de l'annulaire de la même main. Dans la variante de la figure 1, l'interface est ainsi adaptée pour un droitier, sachant qu'il est immédiat pour l'homme du métier d'inverser les positions des effecteurs 4a, 5a, et 6a, pour concevoir une interface pour gaucher.

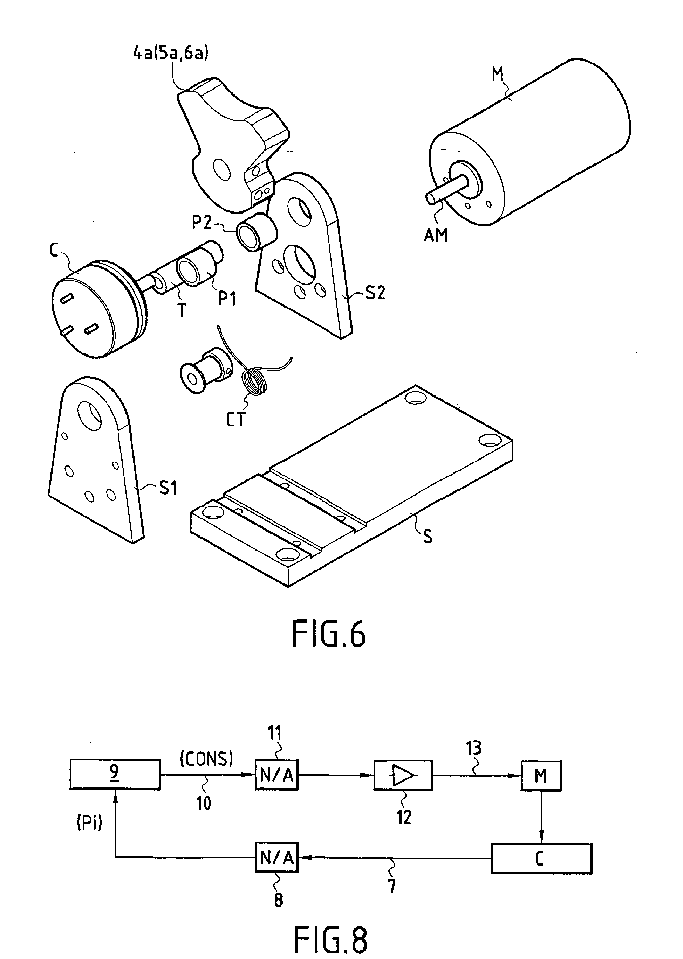

Plus particulièrement, les axes de rotation des effecteurs 4a, 5a, 6a ont chacun une orientation adaptée au mouvement des doigts qui les manipulent. Ainsi, si l'on considère que l'interface comporte un axe A dit axe principal (voir figure 7) qui, en cours d'utilisation de l'interface, est sensiblement parallèle à l'axe de l'avant bras de l'utilisateur, l'axe de rotation 4b de l'effecteur 4a qui est destiné à être manipulé par le pouce forme avec le dit axe principal A un angle β de l'ordre de 45° en sorte de respecter l'orientation angulaire naturelle du pouce de la main par rapport aux autres doigts ; les axes de rotation 5b et 6b des deux autres effecteurs 5a et 6a sont orientés sensiblement perpendiculairement au dit axe principal A. Ainsi, l'axe de rotation 4b de l'effecteur 4a est orienté transversalement aux axes de rotation 5b et 6b des deux autres effecteurs 5a et 6a ; de préférence, l'axe 4b et l'axe 5b (ou respectivement 6b) forment entre eux un angle α (figure 7) qui est légèrement supérieur à 90°. En fonctionnement, l'interface haptique 1 qui vient d'être décrite est par exemple connectée à un système temps réel au moyen d'une carte d'entrées-sorties, lequel système temps réel est connecté à un ordinateur gérant un environnement virtuel 3D, représenté graphiquement sur l'écran de l'ordinateur. Le système temps réel permet principalement de gérer le retour de force sur chaque effecteur digital tel que cela sera expliqué ultérieurement en référence à la figure 8. Le système temps réel fournit également à l'ordinateur les informations de position angulaire de chaque effecteur, lequel ordinateur est programmé pour transformer les informations de position angulaire en actions graphiques dans l'environnement graphique 3D.

Par exemple, et de manière non exhaustive, l'interface 1 peut être utilisée pour manipuler des objets virtuels dans un environnement graphique 3D, à chaque effecteur étant associé un degré de liberté d'un mouvement visualisé à l'écran. Généralement, mais de manière non exhaustive, à chaque effecteur est par exemple associé un mouvement de translation ou de rotation visualisable à l'écran.

Par exemple, en mode translation et afin de rendre l'utilisation de l'interface intuitive, au mouvement de rotation de l'effecteur 4a associé au pouce correspond un déplacement de l'objet manipulé dans la direction de la largeur de l'écran ; au mouvement de rotation de l'effecteur 5a associé à l'index correspond un déplacement de l'objet manipulé dans la direction de la profondeur de l'écran ; au mouvement de rotation de l'effecteur 6a associé à l'annulaire correspond un déplacement de l'objet manipulé dans la direction de la hauteur de l'écran.

En mode rotation, les effecteurs digitaux sont utilisés par exemple pour faire tourner les objets virtuels autour d'axes orthogonaux.

Des mouvements plus complexes que la simple translation ou rotation d'un objet peuvent également être associés à chaque effecteur digital.

Quel que soit le mode de fonctionnement précité (translation, rotation, ...), l'interface 1 peut avantageusement être utilisée en mode isotonique ou en mode isométrique. Le mode isotonique correspond à une commande en position des objets à manipuler ; à une position angulaire de chaque effecteur digital correspond une position à l'écran de l'objet manipulé. Le mode isométrique correspond à une commande en vitesse des objets à manipuler ; chaque effecteur est au départ dans une position neutre, et lorsque l'utilisateur déplace l'effecteur digital, une force proportionnelle au déplacement s'exerce sur son doigt au moyen d'un couple adapté appliqué par le moteur M de la manette ; à chaque force est associée une vitesse.

Dans une variante de réalisation perfectionnée, l'interface 1 peut être équipée pour chaque effecteur d'un sélecteur manuel de mode de fonctionnement (translation/rotation/...) ainsi que d'un sélecteur manuel de mode isotonique/isométrique, de manière à permettre à l'utilisateur de configurer le mode de fonctionnement de chaque effecteur adapté à l'application pilotée au moyen de l'interface homme-machine.

On a représenté sur la figure 8, la boucle de commande d'une manette permettant de simuler un retour de force sur l'effecteur de la manette. Il convient de souligner que l'interface 1 comporte trois manettes découplées. Par conséquent, la commande de l'interface comporte en réalité trois boucles de commande en parallèle du type de celles de la figure 8 (une boucle de commande par manette).

En référence à la figure 8, chaque boucle de commande est une boucle de commande en admittance :
- avec en entrée du système temps-réel 9 les mesures (pᵢ) du couple appliqué sur l'axe de rotation de l'effecteur digital, lesquelles mesures (pᵢ) sont issues du moyen de mesure C de la manette, sous la forme d'un signal électrique analogique 7 qui est converti par un convertisseur analogique/numérique 8,
- et avec en sortie du système temps-réel 9 une consigne numérique (Cons) (signal 10/ figure 8) qui est convertie en un signal analogique au moyen du convertisseur numérique/analogique 11, puis transformée en un signal de commande 13 pour le moteur M au moyen d'un étage d'amplification 12.

La consigne (Cons) calculée par le système temps-réel 9 en fonction des valeurs de couple (pᵢ) mesurées sur l'effecteur de la manette permet de simuler pour l'utilisateur un retour de force sur l'effecteur qui est fonction de la loi de commande (Cons = f(pi)) programmée. Ainsi, le système de commande de chaque manette permet, au moyen du moteur M, de positionner en rotation l'axe de rotation de l'effecteur en fonction du couple appliqué sur l'axe de rotation de l'effecteur, la valeur de la position angulaire dépendant de la loi de commande programmée.

Par exemple, lorsqu'un effecteur digital est utilisé en mode isotonique, le système de commande de la manette permet de simuler sur l'effecteur le poids des objets manipulés, leur frottement, la rencontre d'obstacle, .... Il est possible également de simuler un effet de crantage sur la rotation de l'effecteur.

L'invention n'est pas limitée à la variante particulière de réalisation qui vient d'être décrite en référence aux figures annexées. En particulier, et de manière non exhaustive, il est envisageable de réaliser une interface haptique de type ground-based simplifiée comportant uniquement deux effecteurs digitaux rotatifs découplés, ou au contraire une interface plus sophistiquée comportant plus de trois effecteurs digitaux rotatifs découplés.

L'interface 1 des figures annexée peut également être utilisée pour manipuler des objets réels tels qu'un robot, bras manipulateur,....

## Revendications

1. Interface haptique (1) comportant un boîtier (2a, 2b) destiné à être posé sur une surface, ledit boîtier (2a, 2b) comprenant au moins deux effecteurs digitaux rotatifs découplés (4a, 5a, 6a) et au moins deux lumières (2c) au travers desquels s'étendent au moins en partie lesdits effecteurs (4a, 5a, 6a) en sorte d'être manipulables avec le bout des doigts d'une seule main,
**caractérisée en ce qu'**elle comporte également pour chaque effecteur (4a, 5a, 6a) un moyen de mesure du couple appliqué sur l'axe de rotation de l'effecteur, et des moyens de commande comprenant un moteur (M) permettant de positionner en rotation l'axe de rotation dudit effecteur (4a, 5a, 6a) en fonction du couple appliqué sur l'axe de rotation de ce dit effecteur (4a, 5a, 6a) et mesuré par ledit moyen de mesure.

2. Interface selon la revendication 1 **caractérisée en ce qu'**un premier effecteur (4a) est manipulable avec le pouce, et un deuxième effecteur (5a) est manipulable avec l'index.

3. Interface selon la revendication 2 **caractérisée en ce que** l'axe de rotation (4b) de l'effecteur (4a) associé au pouce est orienté transversalement à l'axe de rotation (5b) de l'effecteur (5a) manipulable avec l'index.

4. Interface selon l'une des revendications 1 à 3 **caractérisée en ce qu'**elle comporte au moins trois effecteurs digitaux rotatifs découplés.

5. Interface selon l'une des revendications 1 à 4 **caractérisée en ce que** l'axe de rotation de chaque effecteur est motorisé.

## Claims

1. A haptic interface (1) comprising a case (2a, 2b) suitable for being put on a surface, said case (2a, 2b) comprising at least two decoupled rotary finger actuators (4a, 5a, 6a) and at least two openings (2c) through which said actuators extend at least partially (4a, 5a, 6a) so as to be capable of manipulation with the fingertips of a single hand, the interface being **characterized in that** it further includes, for each actuator (4a, 5a, 6a), torque measuring means for measuring the torque applied to the axis of rotation of the actuator, and control means including a motor (M) enabling to rotationally position the axis of rotation of said actuator (4a, 5a, 6a) as a function of the torque applied on the axis of rotation of said actuator (4a, 5a, 6a) and measured by said measuring means.

2. An interface according to claim 1, **characterized in that** a first actuator (4a) can be manipulated with the thumb, and a second actuator (5a) can be manipulated with the index finger.

3. An interface according to claim 2, **characterized in that** the axis of rotation (4b) of the actuator (4a) associated with the thumb is oriented transverse to the axis of rotation (5b) of the actuator (5a) that can be manipulated with the index finger.

4. An interface according to one of claims 1 to 3, **characterized in that** it includes at least three decoupled rotary finger actuators.

5. An interface according to one of claims 1 to 4, **characterized in that** the axis of rotation of each actuator is motorized.

## Patentansprüche

1. Haptische Schnittstelle (1) mit einem Gehäuse (2a, 2b), das dazu bestimmt ist, auf eine Fläche aufgesetzt zu werden, wobei das Gehäuse (2a, 2b) wenigstens zwei entkoppelte digitale drehbare Effektoren (4a, 5a, 6a) sowie wenigstens zwei Öffnungen (2c) umfaßt, durch die hindurch die Effektoren (4a, 5a, 6a) wenigstens teilweise verlaufen, um mit der Spitze der Finger einer einzigen Hand betätigbar zu sein,
**dadurch gekennzeichnet, daß** sie auch für jeden Effektor (4a, 5a, 6a) ein Mittel zum Messen des an die Rotationsachse des Effektors angelegten Drehmoments sowie Steuermittel umfaßt, die einen Motor (M) umfassen, der ermöglicht, die Rotationsachse des Effektors (4a, 5a, 6a) in Abhängigkeit des an die Rotationsachse dieses Effektors (4a, 5a, 6a) angelegten und durch das Meßmittel gemessenen Drehmoments drehend zu positionieren.

2. Schnittstelle nach Anspruch 1, **dadurch gekennzeichnet, daß** ein erster Effektor (4a) mit dem Daumen und ein zweiter Effektor (5a) mit dem Zeigefinger betätigbar ist.

3. Schnittstelle nach Anspruch 2, **dadurch gekennzeichnet, daß** die Rotationsachse (4b) des dem Daumen zugeordneten Effektors (4a) quer zur Rotationsachse (5b) des mit dem Zeigefinger betätigbaren Effektors (5a) ausgerichtet ist.

4. Schnittstelle nach einem der Ansprüche 1 bis 3, **dadurch gekennzeichnet, daß** sie wenigstens drei entkoppelte digitale drehbare Effektoren umfaßt.

5. Schnittstelle nach einem der Ansprüche 1 bis 4, **dadurch gekennzeichnet, daß** die Rotationsachse jedes Effektors motorisiert ist.
